# EUROPÄISCHE PATENTANMELDUNG

(11) **EP 2 371 482 A1**
(43) Veröffentlichungstag der Anmeldung: **05.10.2011**
(21) Anmeldenummer: 10158931.5
(22) Anmeldetag: 01.04.2010
(51) Int. Cl.: B23Q 1/54

(54) **Werkzeugmaschine**

(71) Anmelder: Reiden Technik AG, 6260 Reiden (CH)
(72) Erfinder: Kaufmann-Najer, Rafael, 6208 Oberkirch (CH); Kaufmann, Philipp, 6252 Dagmersellen (CH)
(74) Vertreter: Liebetanz, Michael

(57) **Zusammenfassung**

Eine Werkzeugmaschine zur mehrachsigen Bearbeitung eines Werkstücks in einer Aufspannung umfasst einen Maschinenständer (1), einen am Maschinenständer (1) angeordneten Werkstücktisch, der für eine Rotation um seine Drehachse ausgestaltet ist, und einen an dem Maschinenständer (1) befestigten Werkzeugkopf (21), der gegenüber dem Werkstücktisch (10) in drei zueinander senkrecht verlaufenden Richtungen (3, 4, 5) beweglich steuerbar verfahrbar ist. Dabei ist der Werkzeugkopf (21) an einem Werkzeugträger (20) um die longitudinale Achse (52) des Werkzeugträgers (20) drehbar befestigt und die besagte longitudinale Achse (52) des Werkzeugträgers (20) gegenüber der Drehachse des Werkstücktisches verläuft in einer zur Ebene des Werkstücktisches nicht parallelen Ebene. Damit wird eine stabilere Werkzeugmaschine geschaffen, mit der in einfacherer Weise negative Bearbeitungswinkel erreichbar sind.

## Beschreibung

### TECHNISCHES GEBIET

Die vorliegende Erfindung betrifft eine Werkzeugmaschine zur mehrachsigen Bearbeitung eines Werkstücks in einer Aufspannung umfassend einen Maschinenständer, einen mittels einer Konsole am Maschinenständer drehbar angeordneten Werkstücktisch und einen an dem Maschinenständer beweglich steuerbar verfahrbaren Fräskopf.

### STAND DER TECHNIK

Eine solche Werkzeugmaschine ist aus der EP 0 721 819 bekannt, bei der der Fräskopf ein Vertikalfräskopf ist, der auf einem Kreuzschlitten vertikal verfahrbar befestigt ist, wobei der Kreuzschlitten selber in der Horizontalebene verfahrbar an dem Maschinenständer befestigt ist. Der Werkstücktisch ist beim Stand der Technik auf einer Tragkonsole befestigt, die in einem Winkel von 45 Grad nach unten auf einem Auflager des Maschinenständers befestigt ist. Somit ist der Werkstücktisch in seiner Orientierung um die Achse des Auflagers drehbar. Er ist insbesondere nicht immer horizontal angeordnet sondern kann gegenüber der Bearbeitungsachse des Vertikalfräskopfs gedreht werden.

Eine solche Werkzeugmaschine gemäss dem Stand der Technik weist nebst der Spindel des Vertikalkopfes zwei Drehachsen und drei translatorische Achsen auf: eine Bearbeitungsdrehachse des Werkstücktisches und eine dritte Drehachse, gemäss der die Drehachse des Werkstücktisches verschwenkt wird. Hierbei ist nachteilig, dass die beiden präzis zu verstellenden langsamen Drehachsen einer Hintereinanderschaltung auf einer Tragkonsole bedürfen.

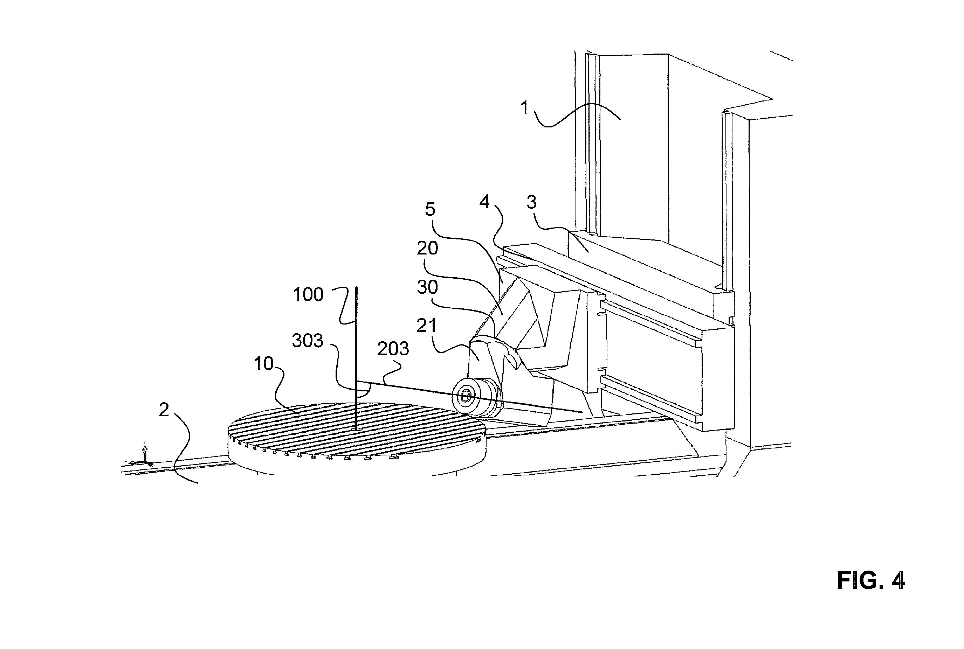

Bei der Anordnung gemäss der EP 0 721 819 ist es nicht möglich, sogenannte negative Winkel zu fräsen, also aus einer Richtung, die mit der Drehachse des Werkstücktisches einen spitzen Winkel bildet, wie es als Winkel 303 aus der Fig. 4 der Figurenbeschreibung hervorgeht.

Aus dem Stand der Technik sind weiter ein sogenannter Gabelkopf bekannt, wie aus dem Prospekt der Firma Zimmermann (www.f-zimmermann.com). Dabei ist eine Schwenkachse rechtwinklig zur Arbeitsspindel angeordnet und sie kann somit beliebig um diese Achse geschwenkt werden, was in der Folge auch bei nur einer Achse negative Bearbeitungslagen zulässt. Der Nachteil des Standes der Technik liegt in einer recht massiven Ausführung bei geringer Stabilität. Die Bearbeitungskraft wird in jedem Fall bei diesen Winkeln bis mehrmals um 90° umgelenkt. Der Gabelkopf ist dafür zwar beidseitig gelagert, aber das schränkt die Bearbeitungsmöglichkeiten ein.

### DARSTELLUNG DER ERFINDUNG

Ausgehend von diesem Stand der Technik liegt der Erfindung die Aufgabe zu Grunde, eine verbesserte Werkzeugmaschine anzugeben, welche eine höhere Präzision in der Einstellung von Werkstücktisch und Werkzeug aufweist. Ferner ist es Ziel der Erfindung die Bearbeitung von negativen Winkeln in einfacher Weise zu gestatten.

Die Lösung der Ziele der vorliegenden Erfindung ist durch die Merkmale des Anspruchs 1 gekennzeichnet. Der Werkstücktisch ist zum einen für eine Rotation um seine Drehachse ausgestaltet. Zum anderen ist der Werkzeugkopf an einem Werkzeugträger um die Achse des Werkzeugträgers drehbar befestigt, so dass die beiden Drehungen nicht hintereinander an einem der Elemente vollführt werden müssen, was so die Stabilität der Maschine erhöht.

Grundsätzlich ist der Werkzeugkopf gegenüber dem Werkstücktisch in drei zueinander senkrecht verlaufenden Richtungen beweglich steuerbar verfahrbar ist. Vorteilhafterweise ist der Werkzeugkopf gegenüber dem Maschinenständer in einer oder zwei der drei, und der Werkstücktisch gegenüber dem Maschinenständer in zwei beziehungsweise einer der drei zueinander senkrecht verlaufenden Richtungen beweglich steuerbar verfahrbar, womit eine grössere Ausgeglichenheit des Antriebs von Werkzeugkopf und Werkstücktisch gegenüber dem Maschinenständer erreicht wird, was eine grösserer Stabilität oder eine kleinere Auslegung der Bauteile ermöglicht.

Weitere Ausführungsformen sind in den abhängigen Ansprüchen angegeben.

Ferner verläuft die besagte Achse des Werkzeugträgers gegenüber der Drehachse des Werkstücktisches in einer zur Ebene des Werkstücktisches nicht parallelen Ebene, was negative Bearbeitungswinkel ermöglicht, wenn dieser Winkel grösser als 45 Grad ist.

Die Erfindung gestattet die Realisierung einer hochpräzisen und zugleich äusserst kraftvollen Werkzeugmaschine. Durch die Ausstattung der Fräsmaschine mit einem Schwenkkopf gestattet dies im Zusammenhang mit einem Rundtisch eine Fünfseitenbearbeitung.

Die Erfindung beruht auf der Einsicht, dass mit einem mindestens einfach geneigten Schwenkkopf ohne zusätzliche Schwenkachse trotzdem negative Bearbeitungen erstellt werden können. Hierzu wird der Achswinkel gegenüber der Vertikalen vergrössert. Somit ist die Drehachse für den drehbaren Werkzeugkopf, also die Hauptachse des Werkzeugträgers, schräg nach unten geneigt.

Wenn vorteilhafterweise die Schwenkachse um die Vertikalachse herum noch um einen seitwärtigen Winkel gedreht wird, dass also dann Hauptachse des Werkzeugträgers weder in einer horizontal ausgerichteten noch in einer vertikal ausgerichteten Ebene gelegen ist, kann die Umlenkung der Kraft auf einen kleineren Winkel beschränkt werden. Dafür müssen im Gegenzug längere Verfahrwege realisiert werden, um die gleichen Bearbeitungsmöglichkeiten zu erreichen. Ein Kompromiss liegt bei einem seitwärtigen Winkel von 25 bis 30, insbesondere um 28 Grad.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine Werkzeugmaschine gemäss einem Ausführungsbeispiel der Erfindung;
- Fig. 2: zeigt einen Ausschnitt der Werkzeugmaschine gemäss Fig. 1 mit vertikal ausgerichtetem Fräskopf;
- Fig. 3: zeigt einen Ausschnitt der Werkzeugmaschine gemäss Fig. 1 mit horizontal ausgerichtetem Fräskopf;
- Fig. 4: zeigt einen Ausschnitt der Werkzeugmaschine gemäss Fig. 1 mit einem negativen Winkel bearbeitenden Fräskopf;
- Fig. 5: zeigt eine Draufsicht auf den Werkstücktisch;
- Fig. 6: zeigt eine Vorderansicht auf die Befestigung des Fräskopfes;
- Fig. 7: zeigt eine Ansicht aus der Richtung des Pfeils VI der Fig. 5; und
- Fig. 8: zeigt einen Ausschnitt der Werkzeugmaschine gemäss Fig. 1 mit horizontal ausgerichtetem Fräskopf (wie in Fig. 3) in einer Draufsicht wie in Fig. 5.

### BESCHREIBUNG BEVORZUGTER AUSFÜHRUNGSFORMEN

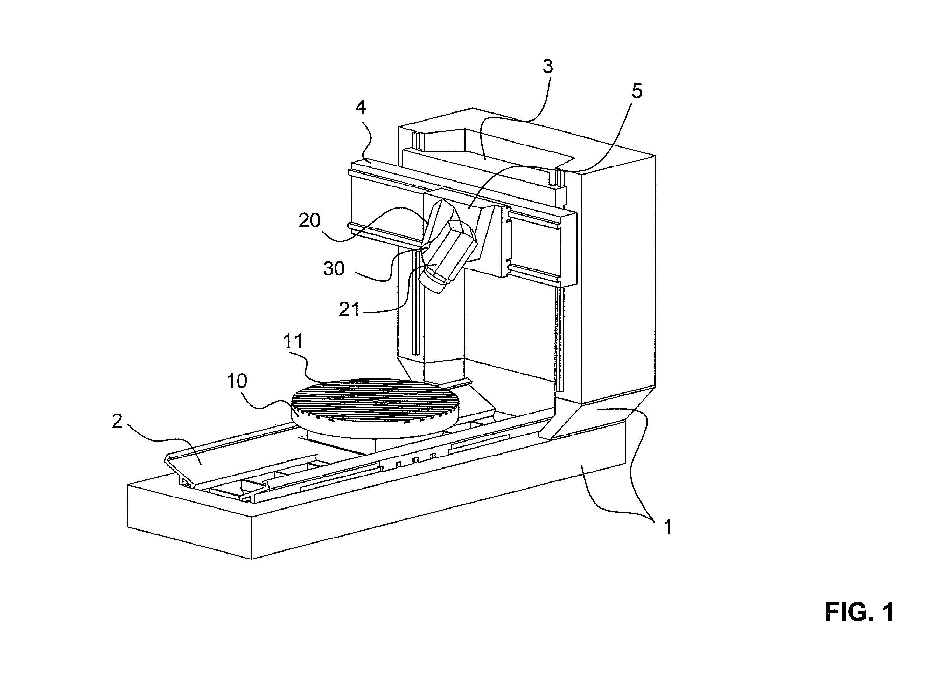

Die Fig. 1 zeigt eine Werkzeugmaschine gemäss einem Ausführungsbeispiel der Erfindung. Die Werkzeugmaschine umfasst einen Maschinenständer 1, an welchem die beweglichen Teile befestigt sind. Dazu gehört die Konsole 2, auf der der Werkstücktisch 10 verfahrbar befestigt ist. Der Werkstücktisch 10 ist auf der Konsole 2 in horizontaler Richtung verfahrbar.

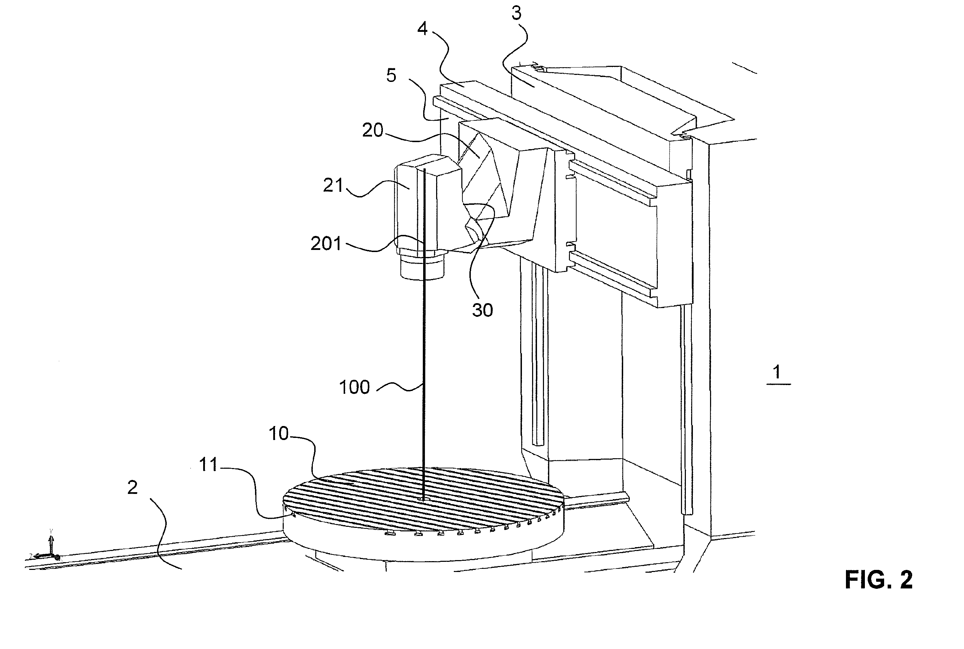

Der Werkstücktisch 10 ist im Ausführungsbeispiel rund, hat eine horizontale Oberfläche und diese weist zur Befestigung eines Werkstückes auf diesem T-Nuten 11 auf. Der Tisch 10 ist um seine Achse 100 (siehe Fig. 2) drehbar. Auf dem Werkstücktisch 10 ist ein in den Zeichnungen nicht dargestelltes Werkstück befestigbar, welches dann mit dem an einem Fräskopf 21 befestigten Fräswerkzeug (ebenfalls nicht dargestellt) in verschiedenen Winkeln bearbeitbar ist. In der Position der Fig. 1 ist dies eine Bearbeitung schräg von oben.

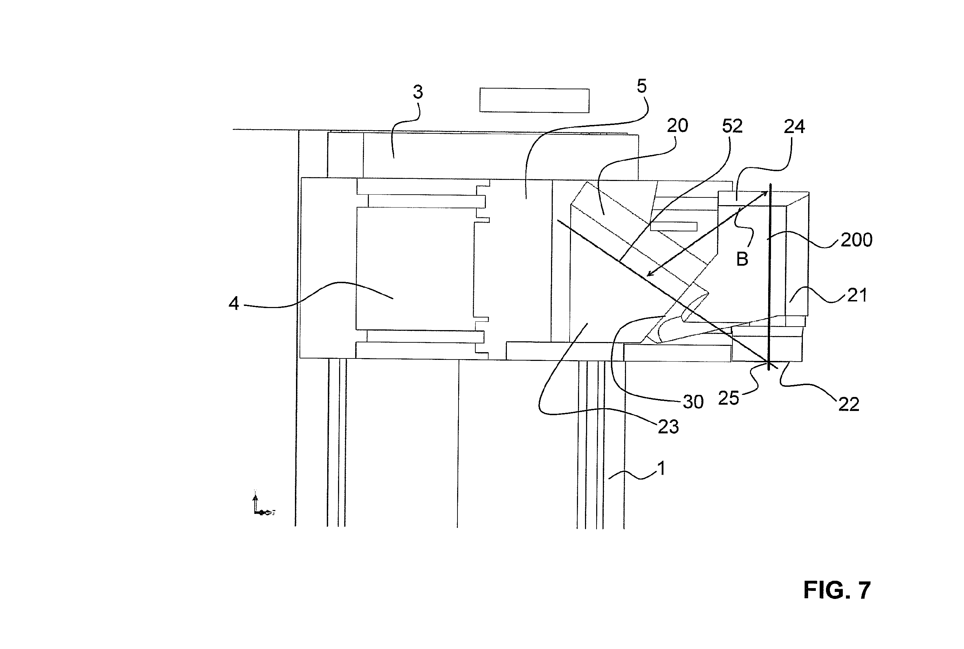

An dem Maschinenständer 1 ist ein Kreuzschlitten 3 vertikal verfahrbar angeordnet. Der vertikale Kreuzschlitten 3, der an Rollenführungen am Maschinenständer 1 befestigt ist, ist auf der anderen Seite mit einer Querschiene 4 verbunden. An der Querschiene 4 ist ein horizontal verfahrbarer Kreuzschlitten 5 befestigt. Mit dem horizontalen Kreuzschlitten 5 ist der weiter unten zu beschreibende Fräskopfträger 20 verbunden. Insgesamt ist die Drehachse 52 (siehe Fig. 7) des drehbaren Werkzeugkopfes 21, die der Hauptachse des Fräskopfträgers 20 entspricht, schräg nach unten geneigt, also weder in einer horizontal ausgerichteten noch in einer vertikal ausgerichteten Ebene gelegen. Die Hauptachse des Fräskopfträgers 20 wird auch Längsachse oder longitudinale Achse 52 desselben genannt.

Bei dem hier dargestellten Ausführungsbeispiel ist also der Fräskopfträger 20 gegenüber dem Maschinenständer 1 sowohl horizontal als auch vertikal verfahrbar. In der in der Fig. 1 dargestellten Position des Fräskopfes 21 bedeutet dies, dass der Fräskopf 21 sowohl entlang seiner Achse 201 verschiebbar ist als auch seitlich entlang der Hauptachse des Querschlittens 4 verfahrbar ist.

Es ist dabei natürlich unerheblich, ob an dem Maschinenständer 1 zuerst der vertikal verfahrbare Kreuzschlitten 3 und anschliessend der horizontal verfahrbare Kreuzschlitten 5 befestigt ist, an dem dann der Fräskopfträger 20 angeordnet ist. Die Anordnung der beiden Kreuzschlitten 3 und 5 kann auch genau andersherum vorgesehen sein, wie z.B. in der EP 0 721 819 dargestellt. Wesentlich ist, dass die Bewegung des Werkzeugträgers 20 sowohl vertikal als auch horizontal verschieblich ist. Ebenfalls wesentlich ist, dass der horizontale Abstand der Drehachse 100 des Werkstücktisches 10 von dem Werkzeugkopf 20 durch die Konsole 2 veränderbar ist. Mit anderen Worten die Maschine gemäss der Erfindung verfügt über drei senkrecht zueinander angeordnete translatorisch bewegbare Antriebe, so dass das Werkzeug (das heisst ebenfalls der Werkzeugkopf 21) gegenüber einem Werkstück (das heisst ebenfalls gegenüber dem Werkstücktisch 10) in den Raumdimensionen verfahrbar ist.

Dabei ist die eine translatorische Verschiebung mit dem Werkstücktisch 10 gekoppelt, der um sich selbst drehbar ist. Die beiden anderen translatorische Verschiebungen sind dem Werkzeugträger 20 zugeordnet. Bei einer anderen Ausführungsform können auch zwei Verschiebungen mit dem Werkstücktisch 10 gekoppelt sein, zum Beispiel die Verfahrbarkeit in der horizontalen Ebene und nur die vertikale Verschiebung dem Werkzeugträger 20 zugeordnet sein. Prinzipiell können auch alle drei Verschiebungen an einem Element, also Werkstücktisch 10 oder Werkzeugträger 20, realisiert sein. Aus Stabilitätsgründen ist eine 2:1 Verteilung aber bevorzugt, im Gegensatz zu einer Verfahrbarkeit von allen drei Achsen von entweder dem Werkzeugträger 20 oder dem Werkzeugtisch 10.

An dem Werkzeugträger 20 ist der Werkzeugkopf 21 über einer Fläche 30 befestigt, durch die eine Drehachse 52 definiert wird, wie in den weiteren Figuren zu sehen sein wird. In der Beschreibung wird statt des allgemeinen Begriffes Werkzeug und Werkzeugträger auch der Begriff Fräskopf verwendet, welches ein spezielles Werkzeug ist. Darunter sind auch andere spanende Bearbeitungswerkzeuge zu verstehen.

Somit sind die drei Drehbewegungen der Maschine ebenfalls verteilt. Die langsame Drehung des Werkstücktisches 10 um seine eigene Achse auf der einen Seite und die langsame Drehung des Werkzeugkopfes 21 um die schräg geneigte Achse 52 des Werkzeugträgers 20 andererseits.

Die Fig. 2 zeigt nun einen Ausschnitt der Werkzeugmaschine gemäss Fig. 1 mit dem Werkstücktisch 10 und seinen T-Nuten 11. Die Achse 100 des drehbaren Tisches 10 ist bei der dargestellten Position des Ausführungsbeispieles mit der Achse 201 des Fräskopfes 21 fluchtend übereinstimmend. Die Bearbeitung eines nicht dargestellten Werkstückes an dem Fräskopf 21 geschieht in der in der Fig. 1 dargestellten Position eine Bearbeitung in der vertikalen Ausrichtung von oben.

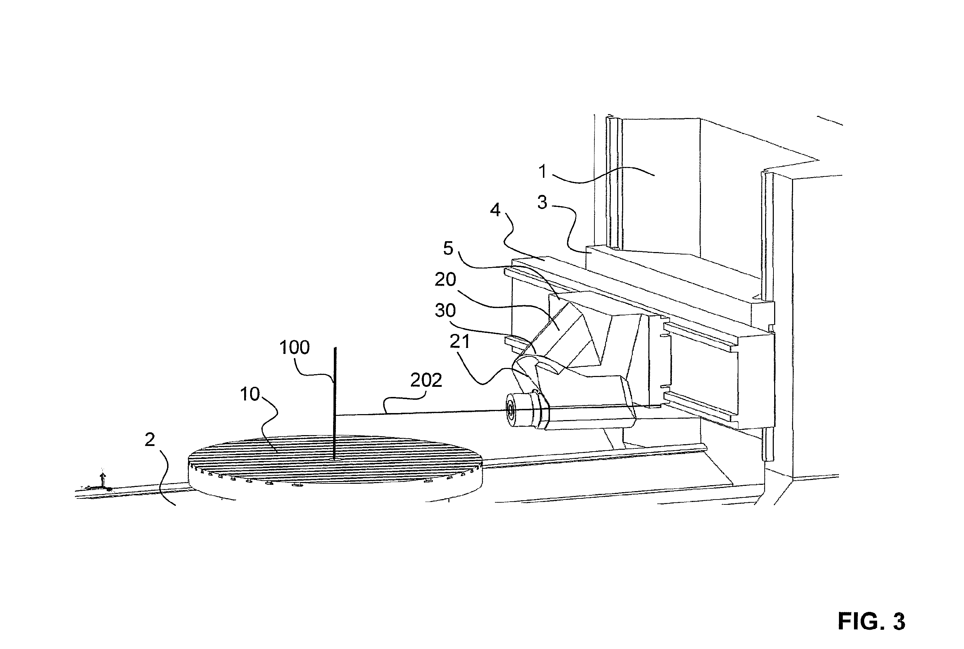

Die Fig. 3 zeigt die Werkzeugmaschine nach Fig. 1, bei der die Achse 202 des Fräskopfes 21 horizontal ausgerichtet ist und die vertikale Achse 100 des Werkstücktisches nun schneidet. Dafür ist der Werkzeugkopf 21 um den Werkzeugträger 20 an der Verbindungsfläche 30 entsprechend gedreht worden und gleichzeitig ist der horizontale Kreuzschlitten 5 gegenüber der Querschiene 4 seitlich nach vorne in Bezug auf die Blickebene verschoben worden. Das Verfahren des vertikalen Kreuzschlittens 3 nach unten gegenüber der Fig. 1 hat dagegen auf die Orientierung der Achse 202 gegenüber der Achse 100 keine direkte Auswirkung.

Die Fig. 4 zeigt einen negativen Winkel bei der Bearbeitung eines auf dem Werkstücktisch 10 befestigten Werkstückes, das in den Figuren nicht dargestellt ist. Die Achse 203 des Werkzeugkopfes 21 schneidet hier die vertikale Achse 100 des Werkstücktisches 10 unter einem negativen Winkel, was nichts anderes bedeutet, als dass der Winkel 303, angedeutet durch einen Doppelpfeil, ein spitzer Winkel ist. Diese Position wird durch ein Weiterdrehen des Werkzeugkopfes 21 gegenüber dem Werkzeugträger 20 erreicht, welcher in einem weiteren Winkel an dem horizontalen Kreuzschlitten 5 befestigt ist. Gleichzeitig verfährt der horizontale Kreuzschlitten 5 nach hinten in Blickrichtung der Fig. 3. Sinnvoll sind negative Winkel von 10 bis 30 Grad, also die Erreichbarkeit eines Wertes des spitzen Winkels 303 von 80 bis 60 Grad. Insbesondere kann ein Wert von 16 Grad vorteilhaft erreicht werden. Dieser Winkel hängt direkt vom vorbestimmten Winkel B ab. Der "Negative Winkel" = ("Winkel B" - 45) * 2 ergibt sich also hier aus (53-45)*2.

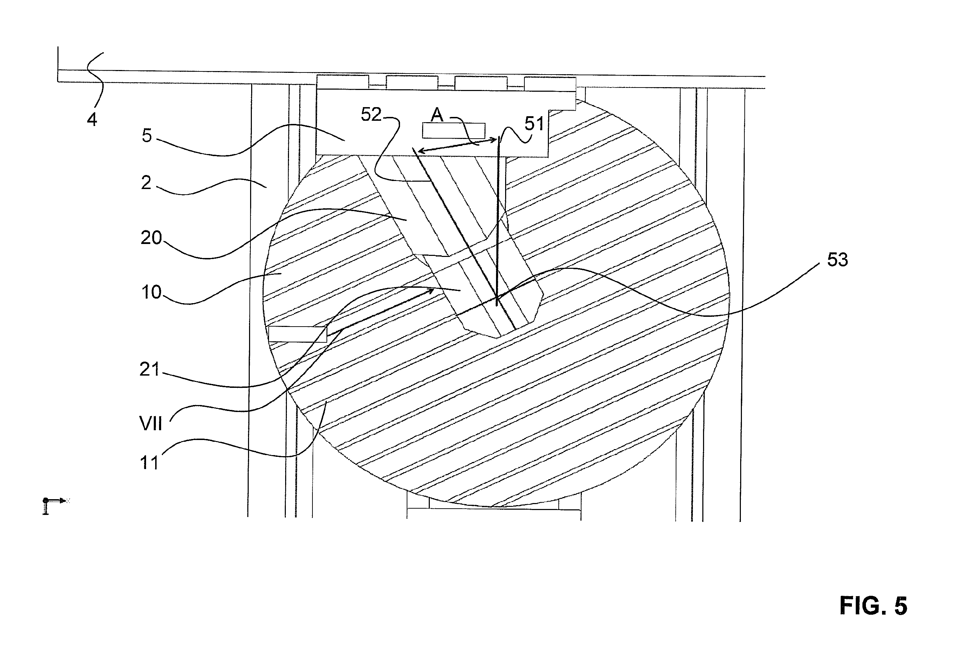

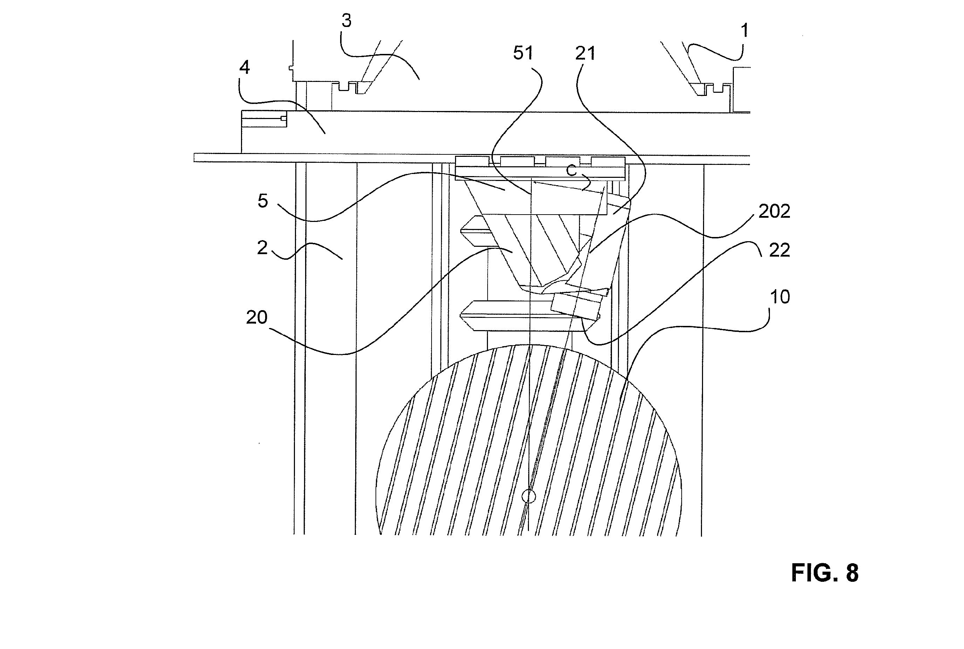

Die Fig. 5 zeigt eine Draufsicht auf den Werkstücktisch 10 mit seinen Nuten 11 zur Befestigung eines in den Zeichnungen nicht dargestellten Werkstückes. Die Querträgerplatte 4 ist dargestellt, die mit Hilfe des vertikalen Kreuzschlittens 2 hoch und herunter gegenüber dem Werkstück 10 verfahrbar ist. An dieser Querplatte 4 ist der horizontale Kreuzschlitten 5 befestigt, an welchem der Werkzeugträger 20 in einem horizontalen Befestigungswinkel A befestigt ist. Mit dem Bezugszeichen 51 ist eine Richtung (die Senkrechte zum Kreuzschlitten 5) in der Fig. 4 eingezeichnet, die senkrecht zur Verschieberichtung des horizontalen Kreuzschlittens 5 verläuft. Somit wird bei Bewegung des Kreuzschlittens 5 die entsprechende Strecke 51 seitlich parallel verschoben. Mit den Bezugszeichen 52 ist die Mittelachse des Werkzeugträgers 20 bezeichnet, die in dem besagten Winkel A zur Richtung 51 steht. Die Mittelachse 52 ist zugleich die Drehachse für den Werkzeugkopf. Bei dem Winkel A handelt es sich um einen spitzen Winkel, der im dargestellten Ausführungsbeispiel 28 Grad ausmacht. Dieser Winkel kann in anderen Ausführungsbeispielen anders ausgestaltet sein, wie im Zusammenhang mit der Fig. 8 erläutert wird.

In der Zeichnung der Fig. 5 treffen sich die beiden Richtungen 51 und 52 im Schnittpunkt 53, welcher gleichzeitig der Mittelpunkt des Werkstücktisches 10 ist und somit von der Achse 100 des Werkstücktisches 10 gekreuzt wird. Natürlich ist im Bezug auf die Bearbeitung eines auf diesem Tisch 10 befestigten Werkstückes die Verfahrbarkeit mit Hilfe des horizontalen Kreuzschlittens 5, des vertikalen Kreuzschlittens 3 und gegebenenfalls der Horizontalkonsole 2 des Werkstücktisches 10 einstellbar.

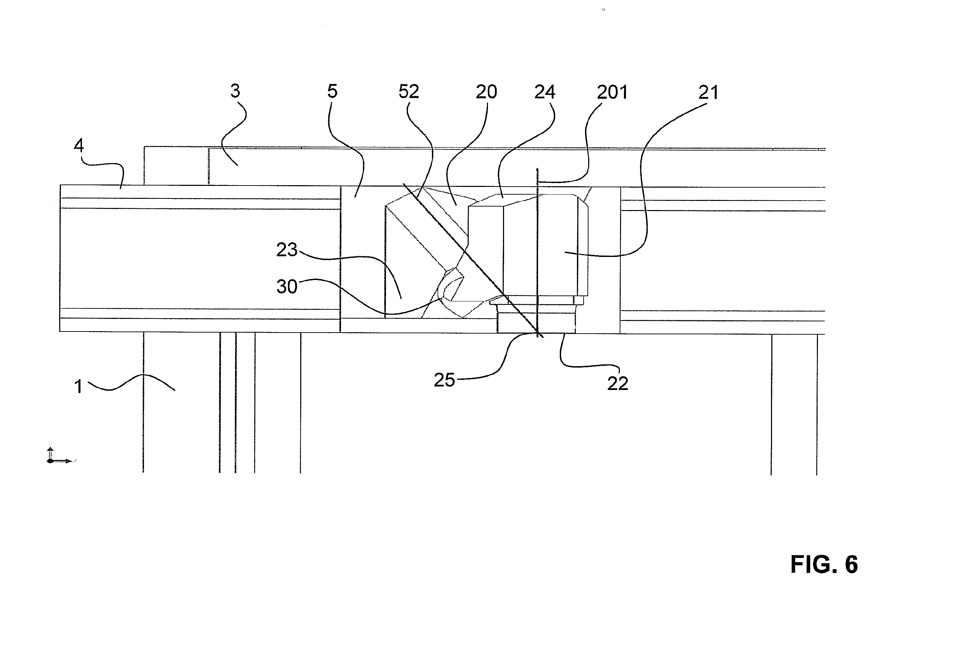

Die Fig. 6 zeigt in einer Vorderansicht in Längsrichtung der horizontalen Konsole 2 einen Ausschnitt der Werkzeugmaschine in Bezug auf den Fräskopf oder Werkzeugkopf 21. An dem Werkzeugkopf 21 ist für die Bearbeitung an der Vorderseite 22 ein Werkzeug angeordnet, welches hier in den Zeichnungen nicht dargestellt ist. Bei der hier in der Fig. 5 dargestellten vertikalen Ausrichtung ist die Achse 201 die Achse, die auch in der Fig. 1 dargestellt ist.

In allen Zeichnungen sind ähnliche Merkmale mit den gleichen Bezugszeichen versehen worden. Somit ist für den Werkzeugkopf 21 seine zentrale Achse 52 eingezeichnet, die die Achse 201 des Fräskopfes 21 an dessen Vorderkante schneidet. Dies ist im dargestellten Ausführungsbeispiel so vorbestimmt, der Schnittpunkt kann auch vor oder hinter der Achse 201 liegen. Aus der Fig. 6 ist ebenfalls erkennbar, dass die Achse 52 als Hauptachse des Werkzeugträgers 20 nicht horizontal oder vertikal ausgerichtet ist, sondern gegenüber der horizontalen Achse des Kreuzschlittens 5 bzw. der Vertikalachse des Kreuzschlittens 3 geneigt ausgerichtet ist.

Der Werkzeugträger 20 ist aus Stabilitätsgründen mit einem unteren Bereich als Abstützungskonsole 23 auf dem Horizonalkreuzschlitten 5 befestigt. Auf der anderen Seite ist der Werkzeugträger 20 mit im Querschnitt gegenüber der Achse als ein Polygonzug erkennbarer Struktur versehen. Man kann dies auch eine gegenüber der Achse 52 annähernd radialsymmetrische Struktur nennen. Wichtig ist die gegenüber seiner Hauptachse 52 vertikal ausgerichteten Anflanschfläche 30 für den Werkzeugkopf 21. Die nach oben als Polygonzug begrenzte Fläche, die auch halbzylindrisch sein könnte, gestattet einen grossen Bewegungsspielraum des Werkzeugkopfes 21 für eine Drehung desselben um die Hauptachse 52 des Werkzeugträgers 20. Vorteilhafterweise ragt der hintere Abschnitt 24 des Werkzeugkopfes 21 gar nicht oder möglichst wenig über die durch die Anflanschfläche 30 vorgegebene Ebene hinaus.

Die Fig. 7 schliesslich zeigt eine Ausschnittsdarstellung des Fräskopfes aus der Blickrichtung VII der Fig. 5 und somit in genauerer Darstellung den Winkel B zwischen der Achse 52 des Werkzeugträgers 20 und der Werkzeug- oder Fräskopfachse 200, die hier vertikal dargestellt ist. Die zentrale Drehachse 25 des Werkzeugträgers 20 ist gleichzeitig die Drehachse des Fräskopfes 21 um den Werkzeugträger 20. Die Drehung wird um die Verbindungsfläche 30 ausgeführt.

Der Winkel B gemäss dem Ausführungsbeispiel der Figuren beträgt 53 Grad. Er kann bei anderen Ausführungsbeispielen insbesondere einen Wert zwischen 46 und 60 annehmen. Der Winkel B legt den maximalen negativen Bearbeitungswinkel (der 90 Grad minus Wert von dem Winkel 303) dadurch fest, dass sich dieser aus (Wert B minus 45) mal 2 berechnet. Bei einem Winkel B von 53 Grad ergeben sich gerade 16 Grad. Ein solcher Winkel ist bei einem Einsatz der Anlage im allgemeinen Maschinenbau sinnvoll. Für den Einsatz der Maschine im Formenbau hingegen ist oft ein negativer Winkel von wenigen Grad ausreichend. Daher liegt die Bandbreite des Winkels B für den Einsatz im allgemeinen Maschinenbau beispielsweise zwischen 50 und 60 Grad, während für den Fonnenbau ein Winkel B zwischen 46 und 50 Grad eingesetzt werden kann.

Vorteilhaft ist, wenn die Achse 200 des Fräskopfes 21 und die Achse 52 des Werkzeugträgers 20 sich in einem Punkt 25 der Vorderseite 22 des Fräskopfes 21 treffen und kreuzen. Dies ist im dargestellten Ausführungsbeispiel so. Dieser Kreuzungspunkt kann auch im Werkzeug selber, zum Beispiel dort, wo die abspanende Handlung passiert, also vor der Vorderseite des Fräskopfs, angeordnet sein. Da die Linearachsen einen entsprechenden Abstand kompensieren müssen, ist die dargestellte Wahl ein Kompromiss zwischen Verfahrbarkeit der Maschine und Kraftübertragung.

Die Fig. 8 zeigt einen Ausschnitt der Werkzeugmaschine gemäss Fig. 1 mit horizontal ausgerichtetem Fräskopf 21 wie in Fig. 3 in einer Draufsicht wie in Fig. 5. Neben der Achse 51 der Senkrechten zum Schlitten 5 ist hier die Achse 202 des Fräskopfes 21 eingezeichnet, wenn dieser horizontal ausgerichtet ist. Dabei ergibt sich ein Winkel C zwischen diesen beiden Achsen. Dieser Winkel C zwischen dem Fräskopf 21 und der horizontalen Mittelachse des Horizontalschlittens 2 bei horizontal ausgerichtetem Fräskopf 21 beträgt hier 13 Grad. Der Winkel A beträgt hier wie oben gesagt 28 Grad. In der Summe ergibt sich ein Winkel A+C von 41 Grad, dessen Wert von der Neigung des Winkels B, hier 53 Grad abhängt. Die seitliche Neigung des Werkzeugkopfes 20, also das Querstellen seiner horizontalen Achse bezüglich der Achse 51, um einen Winkel A <> 0 vermindert die Stabilität. Der Wert kann im hier dargestellten Ausführungsbeispiel zwischen 0 und 41 Grad eingestellt werden, wobei Winkel C dann von 41 Grad bis 0 Grad variieren würde. Bei einem Winkel von C = 41 Grad wäre die Mechanik optimal stabil, aber im Gegenzug muss sich die Querschiene 4 noch weiter bewegen, um eine gleich lange Kante an einem Werkstück in Horizontallage zu bearbeiten. Aber der Winkel kann auch grösser als 41 Grad sein. Im dargestellten Ausführungsbeispiel, wo der Winkel B 53 Grad ist, macht ein grösserer Winkel als 41 Grad keinen Sinn, weil dann nach Fig. 8 der Winkel C schon Null ist. Wird der Winkel B hingegen grösser gewählt, vergrössert sich auch der Gesamtwinkel B + C als Ausgangspunkt für die Einstellung.

Neben diesen möglichen Extremalpositionen wird daher vorteilhafterweise ein mittlerer Winkel A zwischen dem maximalen Winkel C bei Horizontallage und dem Winkel = 0 Grad gewählt, der im Bereich zwischen 2/5 und 3/4 des Maximalwertes liegt, also bei einem Winkel B von 53 Grad, was zu einem Maximalwinkel von C von 41 Grad führt, sollte der Winkel A zwischen 16.4 und 30.8 Grad liegen. In bestimmten Anwendungsfällen kann es sinnvoll sein, den Maximalwert als Extremalposition zu wählen. Dies gilt insbesondere für die Extremalposition, bei welcher der Winkel C gemäss Fig. 8 null wäre. Man kann hier sagen, dass der Winkel A in Abhängigkeit vom Winkel B gesetzt wird: Wenn der Winkel A zwischen 2/5 und 4/5 des Winkels B ist, sollte der Winkel C zwischen 20 Grad und -1 Grad liegen können.

Aus den Figuren ergibt sich in vorteilhafter Weise die Bearbeitbarkeit von negativen Winkeln, wie sie in der Fig. 4 dargestellt sind, da der Werkzeugträger 20 gegenüber der Vertikalen (hier: nach unten) geneigt (Winkel B) und schräg (Winkel A) angeordnet ist. Dadurch ist es möglich, einen an diesem Werkzeugträger 20 befestigten Bearbeitungskopf in eine Stellung zu bewegen, bei der er gegenüber der Oberfläche des Werkstücktisches 10 in einem spitzen Winkel 303 ansetzt und somit gegenüber dieser Oberfläche negative Bearbeitungswinkel zulässt. Gleichzeitig ist durch die Verteilung der die Bearbeitungsposition vorgebenden beiden Drehantriebe auf Werkzeugbefestigung und Werkstückbefestigung eine hohe Stabilität der Maschine erreichbar.

Der Fachmann versieht die Werkzeugmaschine zur mehrachsigen Bearbeitung eines Werkstücks gemäss der Erfindung natürlich mit einer ihm bekannten elektronischen Ansteuerungs- und Kontrolleinheit auf, mit der die fünf Antriebe (drei translatorische Antriebe und zwei Drehantriebe) angesteuert werden, um ein auf dem Werkstücktisch 10 befestigtes Werkstück mit einem an dem Werkzeugkopf 21 befestigten Werkzeug abspanend zu bearbeiten. Dabei kann die gesteuerte Bearbeitung eines Werkstücks während einer Bewegung von Werkzeugtisch 10 oder Werkzeugkopf 21 als solchem von statten gehen, also zu einer Zeit, wenn ein oder mehrere Antriebe von einem oder mehreren der Bewegungsachsen aktiviert ist/sind. Insbesondere kann also die Bearbeitung bei einem Übergang von positiven zu negativen Bearbeitungswinkeln stufenlos vorgesehen sein. Es ist dabei eine simultane Bearbeitung von einer Ausrichtung vertikal gemäss Fig. 2 bis Ausrichtung negativ gemäss Fig. 4 möglich.

### BEZUGSZEICHENLISTE

- A: Befestigungswinkel gegenüber der Horizontalen
- B: Befestigungswinkel gegenüber der Vertikalen
- C: Winkel zwischen Fräskopf - Mittelachse bei horizontal ausgerichtetem Fräskopf
- 1: Maschinenständer
- 2: Konsole
- 3: vertikaler Kreuzschlitten
- 4: Querschiene
- 5: horizontaler Kreuzschlitten
- 10: Werkstücktisch
- 11: T-Nut
- 20: Werkzeugträger
- 21: Fräskopf
- 22: Vorderseite des Fräskopfes
- 23: Abstützungskonsole
- 24: hinterer Abschnitt
- 25: Kreuzungspunkt
- 30: Verbindungs- / Anflanschfläche
- 51: Senkrechte zu 5
- 52: Drehachse Werkzeugkopf
- 53: Schnittpunkt
- 100: Achse Werkstücktisch
- 200: Werkzeugachse
- 201: Achse Fräskopf Fig. 2
- 202: Achse Fräskopf Fig. 3 / 8
- 203: Achse negativer Winkel Fig.4
- 303: spitzer Winkel

## Patentansprüche

1. Werkzeugmaschine zur mehrachsigen Bearbeitung eines Werkstücks in einer Aufspannung umfassend einen Maschinenständer (1), einen am Maschinenständer (1) angeordneten Werkstücktisch (10), der für eine Rotation um seine Drehachse (100) ausgestaltet ist, und einen an dem Maschinenständer (1) befestigten Werkzeugkopf (21), der gegenüber dem Werkstücktisch (10) in drei zueinander senkrecht verlaufenden Richtungen (2, 3, 4, 5) beweglich steuerbar verfahrbar ist, **dadurch gekennzeichnet, dass** der Werkzeugkopf (21) an einem Werkzeugträger (20) um die longitudinale Achse (52) des Werkzeugträgers (20) drehbar befestigt ist, und dass die besagte longitudinale Achse (52) des Werkzeugträgers (20) gegenüber der Drehachse (100) des Werkstücktisches (10) in einer zur Ebene des Werkstücktisches (10) nicht parallelen Ebene verläuft.

2. Werkzeugmaschine gemäss Anspruch 1, **dadurch gekennzeichnet, dass** der Werkzeugkopf (21) gegenüber dem Maschinenständer (1) in einer oder zwei der drei, und der Werkstücktisch (10) gegenüber dem Maschinenständer (1) in zwei beziehungsweise einer der drei zueinander senkrecht verlaufenden Richtungen (2 3, 4, 5) beweglich steuerbar verfahrbar ist.

3. Werkzeugmaschine gemäss einem der vorstehenden Ansprüche, **dadurch gekennzeichnet, dass** die besagte Achse (52) des Werkzeugträgers (20) gegenüber der Drehachse (100) des Werkstücktisches (10) einen geneigten Befestigungswinkel (B) von mehr als 45 Grad aufweist, insbesondere zwischen 46 und 60 Grad, insbesondere zwischen 46 und 53 Grad oder zwischen 50 und 55 Grad aufweist.

4. Werkzeugmaschine gemäss einem der vorstehenden Ansprüche, **dadurch gekennzeichnet, dass** die longitudinale Achse (52) des Werkzeugträgers (20), in der Ebene des Werkstücktisches (10) betrachtet, in einem horizontalen Befestigungswinkel (A) ungleich Null bezüglich einer horizontal ausgerichteten Achse (51) der drei zueinander senkrecht verlaufenden Richtungen (2, 3, 4, 5) der Antriebe für die Relativbewegung von Werkzeugträger (20) und Werkstücktisch (10) angeordnet ist.

5. Werkzeugmaschine gemäss Anspruch 4, **dadurch gekennzeichnet, dass** der Wert des horizontalen Befestigungswinkels (A) in einem Bereich zwischen 2/5 und 3/4 des Maximalwertes des Winkels (C) vorbestimmt ist, der, bei Drehung des Werkzeugkopfes (21) derart, dass dessen Achse (202) horizontal parallel zur Ebene des Werkstücktisches (10) ausgerichtet ist, als der Winkel (C) zwischen dieser Achse (202) des Werkzeugkopfes (21) und der besagten horizontal ausgerichteten Achse (51) von einer der drei zueinander senkrecht verlaufenden Richtungen (2, 3, 4, 5) der Antriebe für die Relativbewegung von Werkzeugträger (20) und Werkstücktisch (10) definiert ist.

6. Werkzeugmaschine gemäss Anspruch 5, **dadurch gekennzeichnet, dass** der horizontale Befestigungswinkel (A) bei einem geneigten Befestigungswinkel von 53 Grad einen Wert zwischen 16 und 31 Grad aufweist.

7. Werkzeugmaschine gemäss einem der vorstehenden Ansprüche, **dadurch gekennzeichnet, dass** die longitudinale Achse (52) des Werkzeugträgers (20) die Achse (200, 201) des Werkzeugkopfs (21) im Bereich dessen vorderer Endfläche (22) schneidet.

8. Werkzeugmaschine gemäss einem der vorstehenden Ansprüche, **dadurch gekennzeichnet, dass** der Werkzeugträger (20) mit einem unteren Bereich als Abstützungskonsole (23) auf dem zugeordneten Element (5) des Maschinenständers (1) befestigt ist.

9. Werkzeugmaschine gemäss Anspruch 8, **dadurch gekennzeichnet, dass** der Werkzeugträger (20) auf seiner der Abstützungskonsole (23) gegenüber liegenden Seite mit im Querschnitt gegenüber der Achse als annähernd radialsymmetrisch also insbesondere halbzylindrisch oder einen Polygonzug bildenden Begrenzungsfläche ausgebildet ist.
